# EUROPEAN PATENT SPECIFICATION

(11) **EP 0 760 140 B1**
(45) Date of publication and mention of the grant of the patent: **08.03.2000**
(21) Application number: 95937330.9
(22) Date of filing: 10.10.1995
(51) Int. Cl.: G06F 17/21

(54) **METHOD AND SYSTEM FOR CHECKING PRINT ORDERS FOR SHORT RUN PRINTING APPLICATIONS**
VERFAHREN UND SYSTEM ZUM ÜBERPRÜFEN VON DRUCKAUFTRÄGEN FÜR ANWENDUNGEN MIT KURZEN DRUCKVORGÄNGEN
PROCEDE ET SYSTEME DE CONTROLE D'INSTRUCTIONS D'IMPRESSION POUR DES APPLICATIONS DE TIRAGE LIMITE

(30) Priority: 31.10.1994 US 332819
(43) Date of publication of application: 05.03.1997
(73) Proprietor: MOORE BUSINESS FORMS, INC., Grand Island New York 14072 (US)
(72) Inventor: CHISM, Larry, M., Grand Island, NY 14072 (US); LEE, Nancy, A., Amherst, NY 14228 (US); HIPP, Christian, J., Grand Island, NY 14702 (US)
(74) Representative: Spence, Anne
(86) International application number: US9512717
(87) International publication number: WO9613781

(56) References cited:
- EP-A- 0 332 557
- EP-A- 0 388 050
- EP-A- 0 602 547
- US-A- 5 359 708

## Description

### FIELD OF THE INVENTION

The present invention relates to the creation and ordering of printed documents marketing brochures and other printed matter using a personal computer or graphics workstation. More particularly, the present invention relates to a method and system for automatically checking the printing parameters specified by the designed document for potential printing inconsistencies, omissions, errors and other printing problems.

### BACKGROUND AND SUMMARY OF THE INVENTION

In the printing and creation of documents, custom business forms, customary practice has been for a sales representative of a printing business to design a printed document in house for a customer, then write up an order for the document and submit it to a printing facility for production. The write-up of the document and the submittal of the order typically were done manually. However, for "short runs" of printed documents, e.g., less than several thousand, it is usually not cost effective to proceed in this customary manner. Alternatively, a customer's digital design file along with accompanying support files would be manually collected and then electronically transmitted or transferred onto transportable media and delivered to the print shop. This method also would not guarantee that all required files were provided to the print shop as well as the fact that many times customer files would contain potential print problems.

In response, several software packages have been developed and are currently marketed which allow a person to design printed documents directly on a personal computer. Printed documents having a wide variety of parameters, designs, verbiage and the like are designed at the customer's personal computer using one of the many different desktop publishing software packages available such as QuarkXPress® available from Quark, Inc. of Denver, Colorado. Accordingly, a customer designs a document and then submits the design in electronic digital form (i.e. in the native format of the design software) to a printshop for printing. For example, the customer can place an order for the custom designed document directly from his/her personal computer by electronically transmitting the document parameters as well as other information to an order receiving location. At the order receiving location sometimes referred to as the "pre-press facility", an order verification is printed, credit is verified or payment made by credit card or the like, and a determination is made regarding the best location to print the document based upon where the document is to be delivered, document parameters, and the like. The document and order information are then transmitted electronically to a printing location at which the document is printed and shipped. This short run application procedure gives the customer a hands-on environment to create his own promotional material and thereby eliminates the need, time and expense required to have a sales representative design the document for the customer. Typically, when the digital copy is received at the printing location, a formal "pre-flight" procedure is manually performed on the customer file. When problems are encountered the customer is notified and given the opportunity to resubmit the file with corrections, or the print shop will repair the file at an hourly charge.

A concern with short run print orders is that the order submitted to the printshop for production be both accurate and complete. However, since short run printing applications are generally turned around in less than 24 hours, there is little time for a printshop to thoroughly review an order, i.e., check the computer generated customer design print file, for completeness, correctness and consistency prior to printing. If the customer order printing parameters are not complete, accurate, and consistent with the printing parameters used at the print shop, the print job will not be run satisfactorily.

This is a particularly troublesome problem with complex printing jobs involving for example a large number of colored illustrations and stylized textual information which are difficult to manually review to determine if any printing errors exist. One example of a printing error is the print shop does not offer a particular color selected by the customer. As a result, the print system will typically default to an alternate color which may not satisfactorily match the color the customer originally selected. Another example is a font specified by the customer may not be available from the font library offered by the printhouse, and as a result, a default different font is used to print the textual information of the custom document. Again, the customer may not be happy with the default font. The selection of fonts is particularly problematic in many print orders because there are currently close to 30,000 font types available. As a practical matter, a printshop may only retain several hundred font types in its current library out of the 30,000. In addition, while the font type may have a single name identified with the font type (two companies may print different font styles under that same name).

The above examples highlight problems when the print system defaults to a selection which was not intended by the customer. A further problem occurs when there is no default parameter programmed or provided in the printing system. In that case, if a customer specified print parameter is unavailable or in error, the print system halts the printing operation or may not even start the printing operation.

One way to detect these errors before running the print order is to print out a pseudo-document using a laser printer based on the customer's document design parameters. While the laser printer output may provide some indication as to how a document will look before starting the actual printing operation, a laser printer cannot print all of the printing parameters designated in a customer's electronic print file. In other words, the true visual impact of the printed document cannot be fully judged. Moreover, this "proofing" operation delays the turn around of the short order run as well as increases the expense.

The present invention resolves these problems and permits the customer/user to prepare a printed document and automatically check the electronic document design file while the document is being designed and before that file is delivered to a document production facility. The present invention therefore enhances the document design process by allowing a user to automatically check the current document at any point in the design process for errors, omissions, and inconsistencies in the document parameters specified in the design document file. Moreover, there is no need for the designer to reformat the design document file from its native format into a standard format for checking. Each time the design document file is checked, all potential print problems are identified for the user so that they can be corrected. The various detected errors are displayed in a user-friendly format along with instructions as to how to resolve the detected errors. Accordingly, the user may quickly correct the document file without having performed multiple conversions between some standard format for checking the document file and the original or native document design format. At completion of design, the user executes a "prepare" option that gathers all supporting files (images, fonts, etc.) of the document into a common location so that the document and supporting files may be easily transferred.

The present invention may be used in conjunction with existing document design software to identify and display to the designer the various potential document production problems such as:
∘ missing fonts and images;
∘ fonts stylized at the application level;
∘ improperly defined colors;
∘ colors defined but not used;
∘ improperly scaled images;
∘ skewed/rotated images;
∘ images with dots per inch less than 300;
∘ cropped images;
∘ missing/modified images;
∘ modified trapping information;
∘ line weights less than 0.25 points.

E.P-A-0602547 describes a system in which a document to be printed is displayed on a computer screen for proof reading. However the proof reading is carried out by a process worker who may pass it as correct or return it to an earlier process screen for correction. The computer is not supplied with predetermined parameters with which the entered information is compared to check that it is not inconsistent, nor does the software indicate what problem is present if there is a problem.

According to one aspect the present invention provides a document generation system comprising:
a document designing work station (13) including a computer programmed to enable an operator to generate an electronic file storing a plurality of different document parameters specifying a document to be produced in which the computer (13) or a further computer (10) to which the electronic file is supplied is programmed with software,
control means arranged for controlling the computer to automatically check document parameters stored in the electronic files that are to be used for producing the document, said software control means being arranged to compare the plurality of document parameters with a predetermined set of parameters to determine if any of the plurality of document parameters is either erroneous, absent, or inconsistent with respect to the predetermined set of parameters, and on the basis of the results of that comparison identify one or more document parameters stored in the electronic file that may cause a problem in producing the document, and indicate to the operator a document parameter so identified.

Messages may be further displayed which explain those problems and provide instructions as to how to correct those print problems. Typical document parameters include page information, font information, color information, and image information, and the messages specified print/production problems with any of the page, font, color, image information.

According to another aspect the present invention provides a method for computer processing an electronic file specifying a variety of parameters for printing a designed document, comprising the computer executed steps of:
(a) analyzing the variety of parameters specified in the electronic file;
(b) detecting parameters that specify inconsistent, erroneous, absent or incomplete print data; and
(c) displaying a message relating to the detected parameters to inform an operator of a need to correct or complete the parameters.

These and other features and advantages of the present invention will be readily apparent to one of ordinary skill in the art from the following written description read in conjunction with the drawings.

### BRIEF DESCRIPTION OF THE DRAWINGS

Figure 1 is a schematic example hardware which may be utilized as a part of the system according to the present invention.
Figures 2(A) - 2(C) are flowcharts illustrating software control procedures for implementing one embodiment of the present invention; and
Figures 3(A) - 3(D) are pictorial representations of screen displays generated in response to an example of a document design checking operation.

### DETAILED DESCRIPTION OF THE DRAWINGS

In the following description, for purposes of explanation and not limitation, specific details are set forth, such as particular hardware and techniques in order to provide a thorough understanding of the present invention. However, it would be apparent to one skilled in the art that the present invention may be practiced in other embodiments that depart from these specific details. In other instances, detailed descriptions of well-known methods and devices are omitted so as not to obscure the description of the present invention with unnecessary detail.

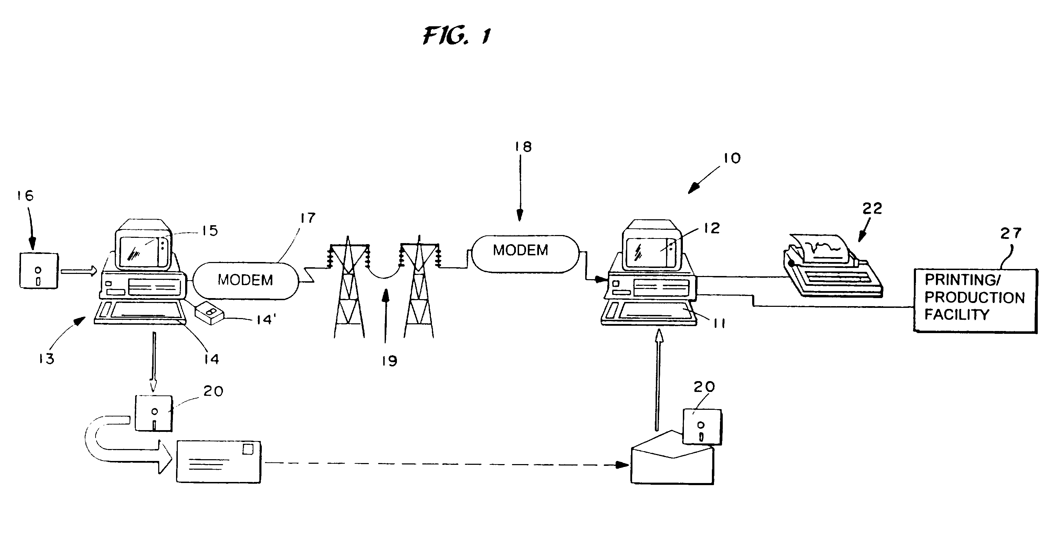

Figure 1 schematically illustrates an example of a system utilizing the present invention. A desktop document design and order system such as that disclosed in U.S. Patent 5,241,464 and assigned to the present assignee (the disclosure of which is incorporated herein by reference) is one environment in which the present invention may be used. Even though an entire document design and printing system is shown, those skilled in the art should appreciate that the present invention simply may be used by an operator at a single computer workstation executing document design software.

The hardware includes a computer station 10 which preferably includes a keyboard 11 and/or other operator input means (e.g., a mouse) and a monitor display 12 at a first location such as a printing order reception facility. Computer station 10 preferably comprises a personal computer for storing and manipulating data. Another computer station, such as computer 13, having a keyboard 14 and/or other operator input means such as mouse 14' and a monitor 15 is provided at a second location that may be remote from the first location. As mentioned above, the present invention may be used simply at a stand alone, computer station such as computer station 13 without any interface or communication with another facility such as computer station 10.

Any suitable desktop/publishing/document design software package may be used by the operator, stored for example on floppy disk 16 or other memory, may be used in conjunction with the computer station 13 to custom design a wide variety of document parameters that may be used to produce printed documents such as custom business documents. One such desktop document design software is the QUARKXPRESS electronic publishing software package available from Quark, Inc. in Fort Collins, Colorado in conjunction with Quark programs such as Adobe Illustrator 88 which permit creation of high resolution black and white and color encapsulated postscript (EPS) pictures may be employed.

The document design software is used in conjunction with the computer station 13 by an operator to design the document which is stored in a digital "native" format specified by the document design software as an electronic file. The electronic file is communicated, for example, by way of modems 17 and 18 (carried over public telephone lines 19), to the computer station 10 at the order reception facility. Alternatively, the electronic files may be captured on disk 20 and mailed to the order receiving facility where computer 10 is located.

At the order receiving facility, the orders and electronics files are received by the computer 10, and are logged, with the order information desirably retained for possible reorders. As described above, a proofing prerun may be printed out on a proof printer 22 for review and editing. The computer 10 also communicates with a document printing or production facility 27. Computer 10 determines an available printing production facility 27 best suited for producing the particular document, depending upon scheduling, geographical location and capabilities of the facility 27. Ultimately, the documents are printed at production facility 27 and shipped to whatever location the customer specifies, whether at the same location as personal computer 13 or some other branch office of the customer.

An advantage of the present invention is that the electronic file need not be reformatted into another format such as a PostScript format in order to analyze and check the printing parameters in the electronic file. The present invention is adapted to be readily incorporated with and in the original, native format of the document design software. In this regard, a "printed document" or simply "document" may include a wide variety of verbiage, graphical representations, positioning of component parts, and the like determined by the designer and oftentimes includes complicated color graphics such color encapsulated postscript pictures. As mentioned above, although the present invention may be used at any computer station such as the document designer's computer 13, the computer 10 located at the ordering facility, or a computer at the ultimate printing facility 27, the description focuses on the preferable use of the present invention at the designer's computer 13.

A customer or other operator designing a printed document using a personal computer, workstation, or any other suitable computer 13 (e.g., the Apple Macintosh Quadra 800 Work Station) and using printed document design software, (such as the QUARKXPRESS software described above), specifies a wide range of printing parameters, such as general document information, page information, font information, color information, image information, and trapping information among other things. General document information may include, for example, document name, directory including a full path name, document version, creation date, particular software package used to design the document, and. particular type of computing hardware, e.g., Macintosh Quadra 800. The page information may include, for example, page number, master page name, height, width, top margin, bottom margin, left margin and right margin among other things. The font information may include both document fonts by name and style and image file fonts used in an image context by name and style. The color information may include both document and image file color information such as color name, color model name, separation on/off, cyan %, magenta %, yellow %, black %, green %, red %, and blue %. The image information may include the image file name, format, type, page, scaling data, angle, skew, status, size, image dimensions, and box dimensions.

When a multi-color document is reproduced, a white area can occur between adjacent objects of different colors. That white area can be caused by misalignment, mis-registration, or shifting/stretching of paper on a press. Trapping enlarges adjacent areas of colors to compensate for incorrect alignment of colors that can occur on-press. Trapping values are based on the press, ink, paper and other materials used. The trapping information may include, for example the following parameters, automatic amounts (controls the amount of trapping that QUARKXPRESS applies to object and background colors); automatic methods (absolute - traps using the value in the auto amount field and proportional - traps using a fraction of the value in the auto amount field); process trap (process separation plates are trapped individually when a page contains overlapping process colors); ignore white (specifies an object color in front of multiple background colors that include white not to take white into account when trapping); indeterminate (controls the amount of trapping that QUARKXPRESS applies to object colors that are in front of indeterminate backgrounds (i.e., multiple colors with conflicting trapping relationships)); and overprint limit (specifies the shade at or above which an object color will overprint its background color).

Of course, these types of printing information are for purposes of example only, and any other additional types of printing information could be used.

In one embodiment, the present invention may be viewed as a software tool for assisting and improving the design of a printer document. The document design is specified by a variety of printing parameters, such as those listed above, stored in digital, native format specified by the document design software (e.g., QUARKXPRESS) in an electronic file on suitable memory storage means such as semiconductor RAM or magnetic floppy disk. The software tool, described in more detail below, instructs the computer to automatically analyze the printing parameters stored in the electronic file in the native design format to determine when one or more of the analyzed printing parameters is likely to cause a problem with respect to the printing of the document. As mentioned above, this software tool may be used at any computer station, but preferably typically at the computer workstation 13 where the designer is designing the document.

A predetermined set of instructions, printing parameters, and options available for producing documents at the production facility 27 are stored in the computer's memory. The specified printing parameters stored in the document design software native format in the electronic file corresponding to the document design are compared with the predetermined set of instructions, printing parameters, and options to determine if any are unavailable, inconsistent (e.g. out of range), or simply in error with respect to the predetermined set of printing parameters.

Each detected potential problem is indicated to the operator in some fashion, such as by highlighting or flagging the particular parameter on the computer display terminal. Obviously, other means of indication could be used such as audible warning. In addition, an explanation of the nature of the potential problem and/or instructions of how to remedy the potential problem are also provided, e.g. by display.

Thus, the present invention describes a method for computer processing an electronic file specifying in the native document design software format a variety of parameters for producing a customized document, including for example the steps of analyzing the variety of parameters specified in the electronic file, detecting the parameters that specify inconsistent, erroneous, or incomplete print data, and displaying a message relating to the detected parameters.

The present invention also provides a printed document design system that includes a document designing workstation including a computer enabling an operator to generate an electronic file storing a plurality of different document parameters specifying a document to be printed. Software control means control the computer to automatically check the different document parameters stored in the electronic file in preparation for printing the document. The software control means controls the computer to identify document parameters stored in the electronic file that may create problems in printing the custom document. More specifically, the software control means compares the plurality of document parameters with the predetermined set of document parameters to determine if any of the plurality of document parameters is erroneous, absent, or inconsistent with respect to the predetermined set of document parameters.

At a larger system level, the present invention may be used to provide an improved system for designing and printing a document where at a first location such as the customer's home or office, a print document is designed and a plurality of parameters defining the document is stored in electronic format in an electronic file. The electronic file is communicated to a second location such as a document production business facility, and at the second location, production of the designed document is coordinated. Before production, the electronic file is automatically checked, (either at the first or second location or both), to determine whether there may be a problem in printing the designed document using the document parameters defining the document in an electronic format. After the checking operation, the document may then be produced.

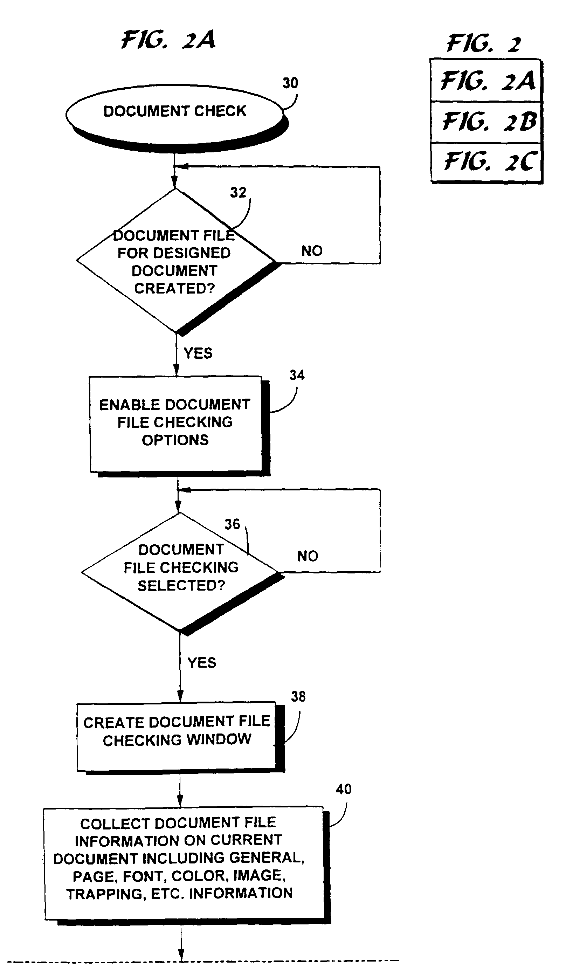

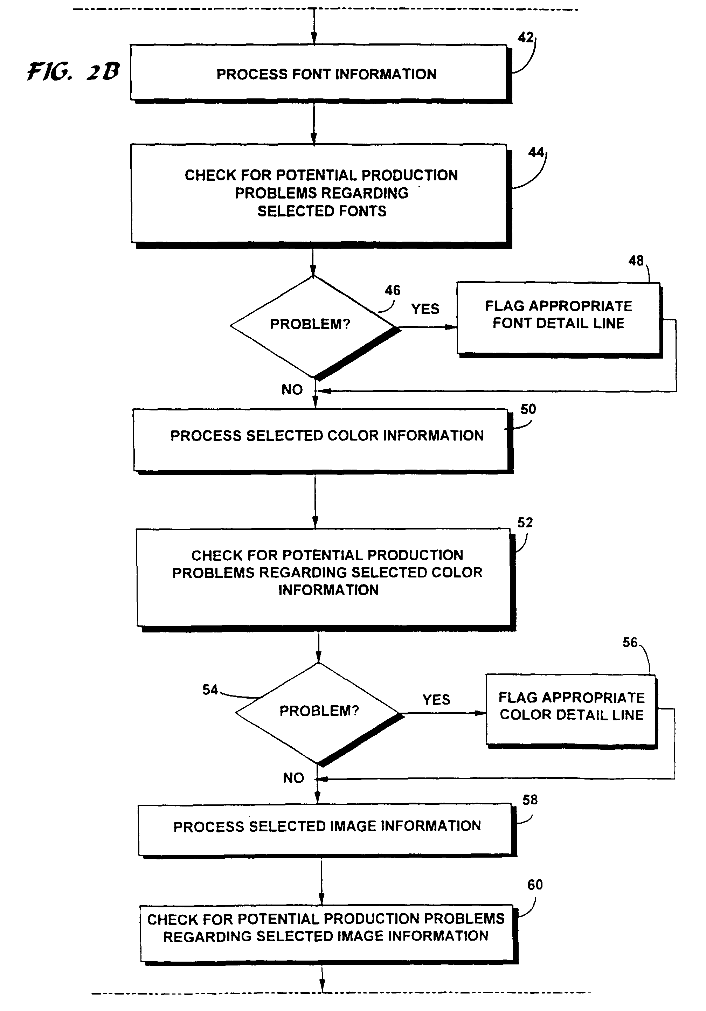

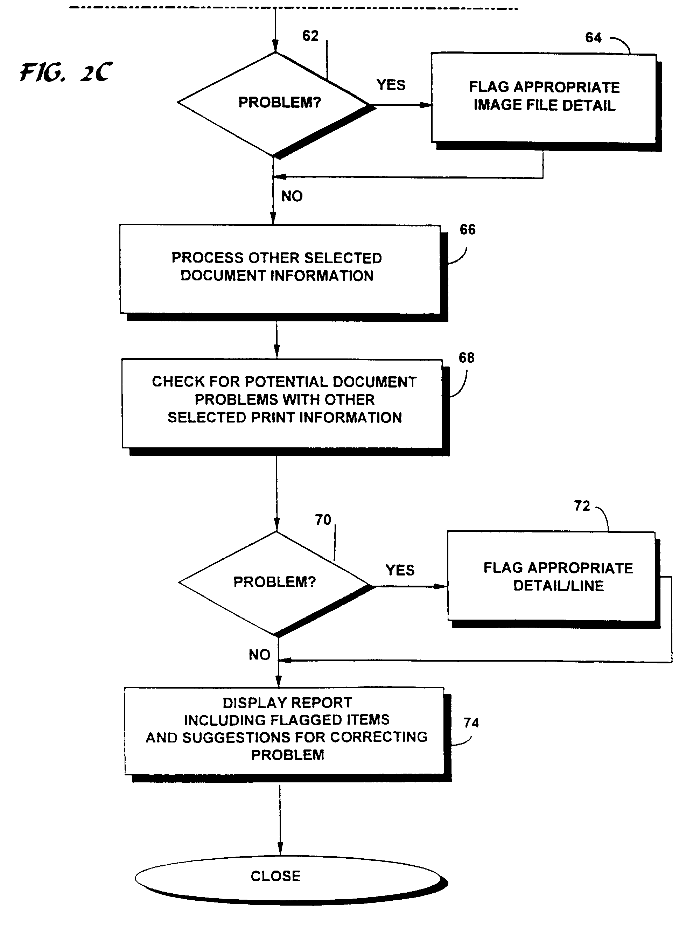

Flowcharts which describe the design document checking operation implemented using software control means such as a programmable computer, are now described in conjunction with Figures 2(A) - 2(C). The document check routine 30 first decides (block 32) whether an electronic document file for a designed document has been created. If so, document file checking options are enabled (block 34). This particular flowchart illustrates therefore that the present invention may be used, for example, as an important extension to existing document design software, and may be included as one of many options that a document designer or other operator may select from a computer menu screen.

Once the document file checking option is selected (step 36), a document file checking window or display is established (step 38). This window indicates to an operator that the computer is ready to receive an electronic file which specifies various printing parameters for designing a document. In step 40, the document file related to a currently designed document including general, page, font, color, image, or trapping, etc. information is for retrieved analysis. Each type of specified document information is automatically processed beginning, for example, with the font information (step 42). Potential production problems regarding the selected fonts are determined (step 44) by comparing the selected fonts with the fonts available at the production center and by detecting whether all fonts necessary for production have been specified in the electronic file. If a problem is detected (step 46), the appropriate font detail line in the electronic file that may pose a problem is flagged (step 48).

The color information selected for the designed document is processed (step 50) and checked for potential problems (step 52). If a potential problem is detected, the appropriate color detail line is flagged (step 56). Selected image information is processed (step 58) and checked for potential production problems regarding that information (step 60). If a problem is detected (step 62), the image file detail which may cause the problem is flagged (block 64). Other selected document information from the electronic file is also processed (block 66) and checked (block 68) for potential production problems. If a potential problem is detected (step 70), that corresponding detail/line is flagged (step 72). A display and/or report (to be described in further detail below) is then provided to an operator (step 74) listing for example the flagged items, an explanation of why the flagged items may be a problem for production, and instructions/suggestions of how to eliminate the problems.

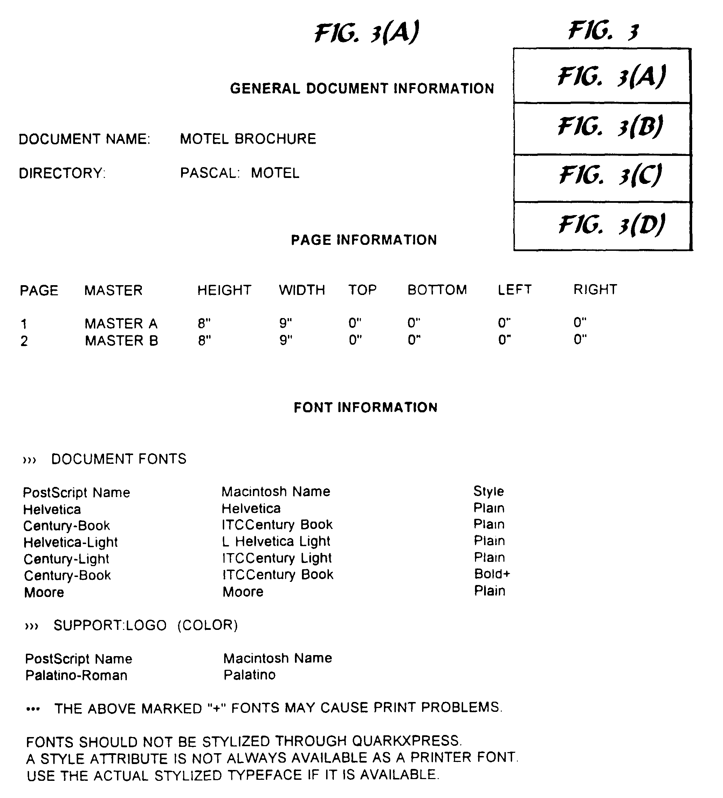

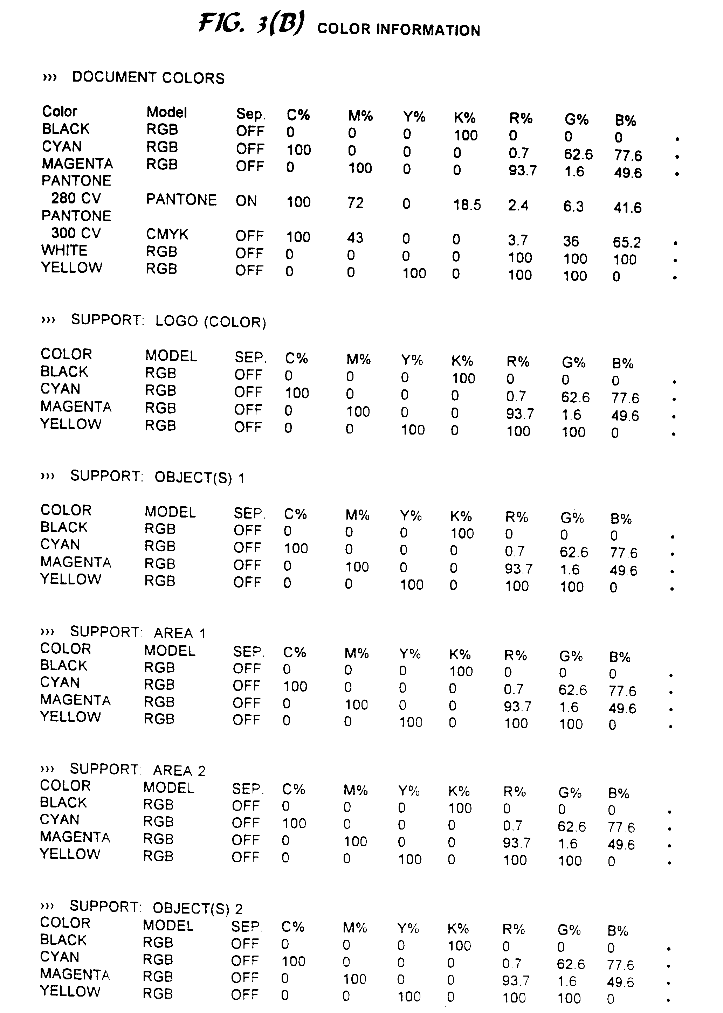

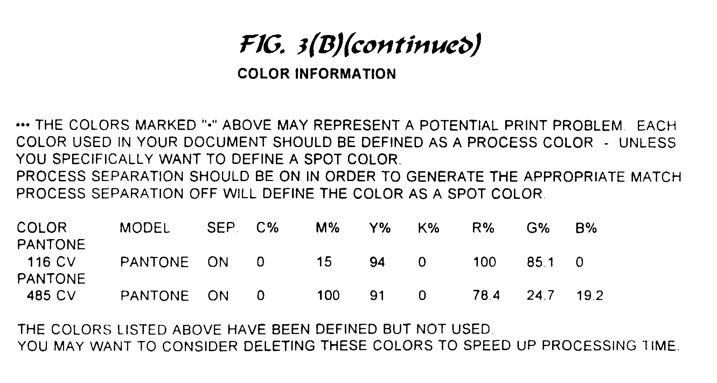

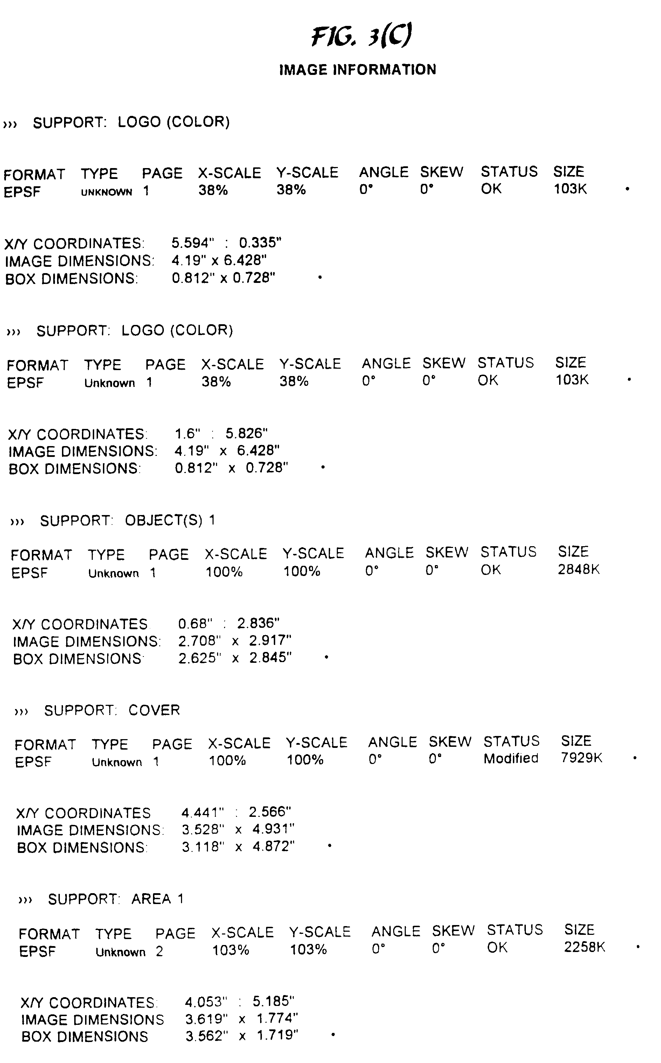

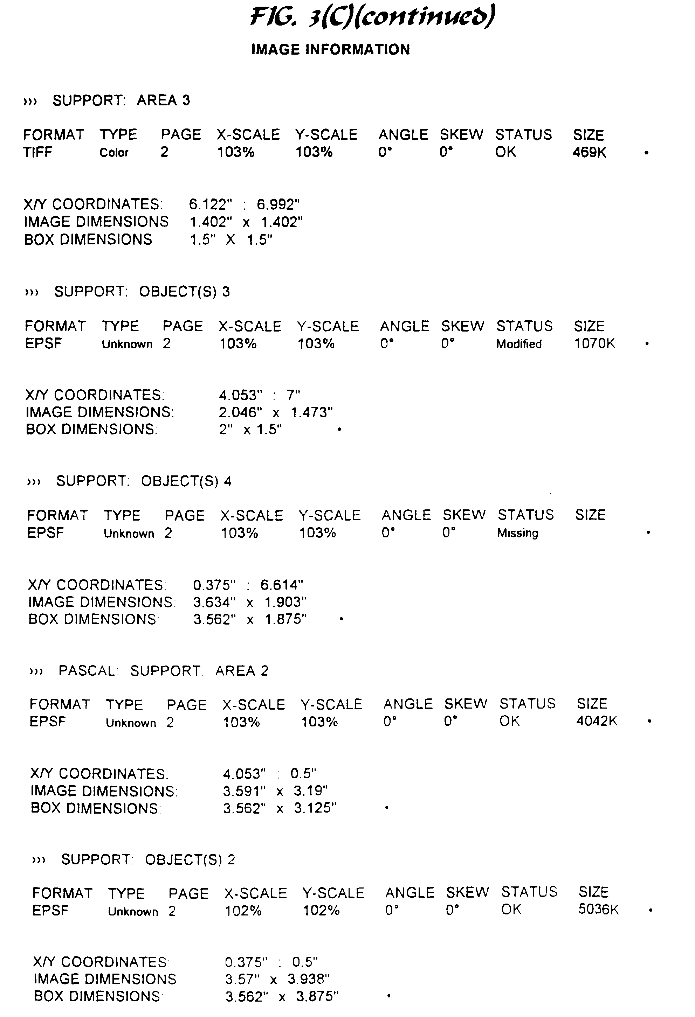

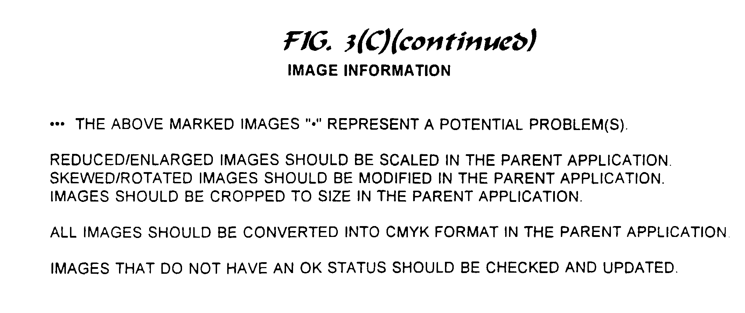

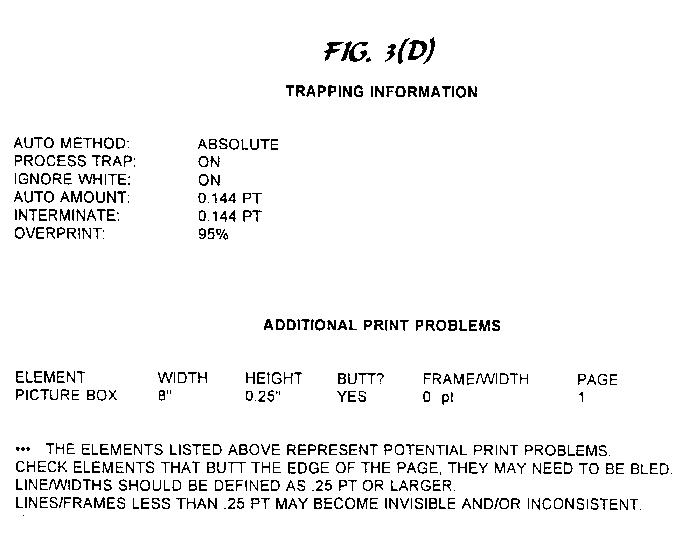

An example of how the present invention may be applied to analyze a custom designed document whose parameters are stored in an electronic file in the document design software format for a motel marketing brochure including a variety of page, font, color, image and trapping information will now be described in conjunction with Figures 3(A) - 3(D). Significantly, the document file is analyzed directly in the document design software native file format. There is no need to convert the document file format to some general or standardized format before checking the file. This allows an operator to readily and directly check a designed document file during and after the design process.

Figure 3(A) shows a display of general information, such as document name, the directory and can include any other information which may be of use for identifying or explaining the document design or the electronic document file. Page information specifies the height and width of the page as well as various margin dimensions. The font information includes the variety of fonts specified by the electronic document file.

After this document file information was automatically checked in accordance with the present invention, it was determined that the document font corresponding to Century-Book (the PostScript font name) or the ITC Century Book (the Macintosh font name) in bold style may cause a production problem. That particular font information line or detail is therefore indicated, e.g., highlighted, using a plus symbol adjacent that information line font. A statement is displayed that the indicated font may cause production problems, and the potential problem is explained, such as "a style attribute is not always available as a printer font." The present invention also provides the operator with instructions on how to correct the potential problem, i.e., "use the actual stylized type face if it is available."

Figure 3(B) shows displays relating to the color information specified in the electronic file of document parameters. Specific features of the document such as the document, the motel logo, various objects in and areas of the document, each have a specific color identified with process separation being specified as on or off along with the percentages of various color inks needed to print a particular document background, logo, object, area, etc. Again, several of the color lines/details are marked with a bullet symbol to highlight potential print problems with those color selections. An explanation and proposed solution to the problems are provided.

In addition, colors and other parameters which may have been initially defined but ultimately will not be used in the production of the designed document are identified. As indicated in the display screen of Figure 3(B), the operator is encouraged to consider deleting these unused color parameters to speed up processing time.

Figure 3(C) illustrates an example of image information displayed as a result of the automatic electronic file checking operation. The image information includes, for example, an image format, type, the page on which the image information is to be printed, various scaling information (e.g., X-scale and Y-scale), orientation information (e.g., angle and skew), status, and size information. The actual XY coordinate and various dimensional information relating to the image are also specified. Again, potential production problems with the image information are highlighted or flagged. Of course, any highlighting/indication mechanism could be used. Explanations of the potential problems and instructions of how to remedy those problems are provided. Similar information is illustrated in Figure 3(D) regarding trapping information as well as any other additional problems which may have been detected while analyzing the parameters set forth in the electronic document file.

Thus, the present invention overcomes many of the drawbacks that plague short run print document applications by automatically checking at any time during or after the design process in the native format of the document design software the document parameters specified by a user directly at user's PC. In addition, the present invention may be used at the production facility or at any computer for that matter, in order to identify potential production problems and offer solutions so that those problems can be corrected before document production takes place. This saves time and money as well as eliminates the need to have an operator manually proof the document parameters and/or perform test production runs to generate sample documents on a laser printer or other printing mechanism.

The present invention also solves perhaps a larger problem of printing up documents that ultimately are not what the customer orders or wants. Rather than substituting arbitrary default parameters for missing or erroneous document parameters included in the electronic document file, the designer personally has the opportunity to detect potential production problems and choose alternative document parameter selections satisfactory to the designer before placing the order. Similarly, the ordering and/or production facility may double check the document file, and if a potential problem is detected, the designer may be contacted with a specific explanation of the problem and proposed solutions/changes that the designer can authorize.

It will thus be seen that according to the present invention, an effective and advantageous method and system have been provided for the design, checking, and production of short runs of document. The designed document is checked automatically in the native document design software format for potential production problems so that any detected problem can be eliminated/corrected before production. Of course, the present invention may equally advantageously be applied to any size run of documents large and small. While the invention has been shown and described in what is presently believed to be the most practical and preferred embodiment, it will be apparent to those of ordinary skill in the art that many modifications may be made within the scope of the invention as claimed.

## Claims

1. A document generation system comprising:
a document designing work station (13) including a computer programmed to enable an operator to generate an electronic file storing a plurality of different document parameters specifying a document to be produced in which the computer (13) or a further computer (10) to which the electronic file is supplied is programmed with software,
control means arranged for controlling the computer to automatically check document parameters stored in the electronic files that are to be used for producing the document, said software control means being arranged to compare the plurality of document parameters with a predetermined set of parameters to determine if any of the plurality of document parameters is either erroneous, absent, or inconsistent with respect to the predetermined set of parameters, and on the basis of the results of that comparison identify one or more document parameters stored in the electronic file that may cause a problem in producing the document, and indicate to the operator a document parameter so identified.

2. The system according to Claim 1 including a display characterised in that the software control means is arranged to control the computer or the further computer to display messages to the operator on the display relating to problems in the identified document parameters.

3. The system of Claim 2 characterised in that the messages display instructions of how to correct the problems identified.

4. The system according to Claim 2 or Claim 3 characterised in that the document parameters include page information, font information, and colour information and the messages specify problems with any of the page, font and colour information and/or the document parameters include image information including size and orientation of images included in the document and the messages specify problems with any of the image information.

5. The system according to any of Claims 1 to 4 characterised in that the potential production problems include improperly scaled, skewed, or rotated images.

6. The system according to any of claims 1 to 5 in which the computer automatically checks the document parameters in a format in which those document parameters are created and stored in the electronic file at the document designing work station.

7. A method for computer processing an electronic file specifying a variety of parameters for printing a designed document, comprising the computer executed steps of:
(a) analyzing the variety of parameters specified in the electronic file;
(b) detecting parameters that specify inconsistent, erroneous, absent or incomplete print data; and
(c) displaying a message relating to the detected parameters to inform an operator of a need to correct or complete the parameters.

8. The method according to Claim 7, wherein the electronic file stores the specified variety of parameters in a native format of document design software used in designing the document and wherein step (a) further comprises:
comparing the variety of parameters in the native document design software format with a predetermined set of printing parameters to determine if any of the variety of parameters is erroneous, absent, or inconsistent with respect to the predetermined set of printing parameters and further comprising:
displaying one or more parameters that may cause a problem in printing the designed document.

9. A method for designing and printing a designed document, comprising the steps of:
(a) at a first location, designing a designed document and storing a plurality of print parameters defining the document in electronic format in an electronic file;
(b) transmitting the electronic file to a remote second location;
(c) at the second location, coordinating production of the designed document;
(d) at either the first or second location, computer processing the electronic file in accordance with claim 7;
(e) printing the designed document.

10. The method according to Claim 7 or Claim 8, further comprising:
displaying to an operator how to remedy the displayed problem.

11. The method according to Claim 9 characterised in that comparing the specified parameters includes:
comparing specified printing fonts with a predetermined set of printing fonts and flagging a font item detail line where the comparison indicates the presence of an erroneous, absent, incomplete or inconsistent specified printing font,
comparing specified printing colours with predetermined colour information and flagging a colour item detail line where the comparison indicates the presence of an erroneous, absent, incomplete or inconsistent specified printing colour,
comparing specified printing image information with predetermined image information and flagging an image item detail line where the comparison indicates the presence of an erroneous, absent incomplete, or inconsistent specified printing image, and
the displaying a message includes displaying a list of the items flagged, an explanation why the flagged items may cause a printing problem and suggestions of how to eliminate the printing problem.

## Patentansprüche

1. Dokumentenerzeugungssystem, das folgendes umfaßt:
Dokumentenentwurfsworkstation (13) mit einem Rechner, der programmiert ist, damit ein Bediener eine elektronische Datei erzeugen kann, in der mehrere verschiedene Dokumentenparameter gespeichert sind, die ein zu erstellendes Dokument spezifizieren, wobei der Rechner (13) oder ein weiterer Rechner (10), dem die elektronische Datei geliefert wird, mit Software programmiert ist,
ein Steuermittel, das ausgelegt ist, den Rechner zu steuern, so daß er in den elektronischen Dateien gespeicherte, für die Erstellung des Dokuments zu verwendende Dokumentenparameter automatisch prüft, wobei das Softwaresteuermittel ausgelegt ist, die mehreren Dokumentenparameter mit einer vorbestimmten Menge von Parametern zu vergleichen, um festzustellen, ob irgendeiner der mehreren Dokumentenparameter hinsichtlich der vorbestimmten Menge von Parametern falsch ist, fehlt oder unstimmig ist, und auf der Grundlage der Ergebnisse dieses Vergleichs einen oder mehrere in der elektronischen Datei gespeicherte Dokumentenparameter zu identifizieren, die möglicherweise bei der Erstellung des Dokuments zu einem Problem führen können, und dem Bediener einen so identifizierten Dokumentenparameter anzuzeigen.

2. System nach Anspruch 1, mit einem Display, dadurch gekennzeichnet, daß das Softwaresteuermittel ausgelegt ist, den Rechner oder den weiteren Rechner zu steuern, auf dem Display Meldungen an den Bediener anzuzeigen, die Probleme bei den identifizierten Dokumentenparametern betreffen.

3. System nach Anspruch 2, dadurch gekennzeichnet, daß die Meldungen Anweisungen zur Korrektur der identifizierten Probleme anzeigen.

4. System nach Anspruch 2 oder 3, dadurch gekennzeichnet, daß zu den Dokumentenparametern Seiteninformationen, Schriftinformationen und Farbinformationen zählen und die Meldungen Probleme mit beliebigen der Seiten-, Schrift- und Farbinformationen spezifizieren und/oder die Dokumentenparameter Bildinformationen einschließlich Größe und Orientierung von in dem Dokument enthaltenen Bildern enthalten und die Meldungen Probleme mit beliebigen der Bildinformationen spezifizieren.

5. System nach einem der Ansprüche 1 bis 4, dadurch gekennzeichnet, daß zu den möglichen Erstellungsproblemen falsch skalierte, schiefe oder gedrehte Bilder zählen.

6. System nach einem der Ansprüche 1 bis 5, bei dem der Rechner automatisch die Dokumentenparameter in einem Format prüft, in dem jene Dokumentenparameter erzeugt und in der elektronischen Datei an der Dokumentenentwurfsworkstation gespeichert werden.

7. Verfahren zur rechnergesteuerten Verarbeitung einer elektronischen Datei, die verschiedene Parameter zum Drucken eines entworfenen Dokuments spezifiziert, mit folgenden, durch einen Rechner ausgeführten Schritten:
(a) Analysieren der verschiedenen, in der elektronischen Datei gespeicherten Parameter;
(b) Erfassen von Parametern, die unstimmige, falsche, fehlende oder unvollständige Druckdaten spezifizieren; und
(c) Anzeigen einer die erfaßten Parameter betreffenden Meldung, um einen Bediener über die Notwendigkeit zu informieren, die Parameter zu korrigieren bzw. zu vervollständigen.

8. Verfahren nach Anspruch 7, bei dem die elektronische Datei die spezifizierten verschiedenen Parameter in einem beim Entwerfen des Dokuments verwendeten nativen Dokumentenentwurfssoftwareformat speichert und wobei Schritt (a) weiterhin folgendes umfaßt:
Vergleichen der verschiedenen Parameter in dem nativen Dokumentenentwurfssoftwareformat mit einer vorbestimmten Menge von Druckparametern, um festzustellen, ob irgendwelche der verschiedenen Parameter falsch sind, fehlen oder hinsichtlich der vorbestimmten Menge von Druckparametern unstimmig sind, und weiterhin mit folgendem:
Anzeigen von einem oder mehreren Parametern, die beim Ausdrucken des entworfenen Dokuments zu einem Problem führen können.

9. Verfahren zum Entwerfen und Ausdrucken eines entworfenen Dokuments, das folgende Schritte umfaßt:
(a) Entwerfen eines entworfenen Dokuments an einem ersten Ort und Speichern von mehreren, das Dokument definierenden Druckparametern in elektronischem Format in einer elektronischen Datei;
(b) Übertragen der elektronischen Datei zu einem abgesetzten zweiten Ort;
(c) Koordinieren der Erstellung des entworfenen Dokuments an dem zweiten Ort;
(d) rechnergesteuerte Verarbeitung der elektronischen Datei gemäß Anspruch 7 entweder an dem ersten oder dem zweiten Ort;
(e) Drucken des entworfenen Dokuments.

10. Verfahren nach Anspruch 7 oder 8, weiterhin mit folgendem:
einem Bediener anzeigen, wie das angezeigte Problem gelöst werden kann.

11. Verfahren nach Anspruch 9, dadurch gekennzeichnet, daß das Vergleichen der spezifizierten Parameter folgendes enthält:
Vergleichen spezifizierter Druckschriften mit einer vorbestimmten Menge von Druckschriften und Markieren einer Schriftangabendetailzeile, wobei der Vergleich auf das Vorliegen einer falschen, fehlenden, unvollständigen oder unstimmigen spezifizierten Druckschrift hinweist,
Vergleichen spezifizierter Druckfarben mit vorbestimmten Farbinformationen und Markieren einer Farbenangabendetailzeile, wobei der Vergleich auf das Vorliegen einer falschen, fehlenden, unvollständigen oder unstimmigen spezifizierten Druckfarbe hinweist,
Vergleichen spezifizierter Druckbildinformationen mit vorbestimmten Bildinformationen und Markieren einer Bildangabendetailzeile, wobei der Vergleich auf das Vorliegen eines falschen, fehlenden, unvollständigen oder unstimmigen spezifizierten Druckbilds hinweist, und
wobei das Anzeigen einer Meldung das Anzeigen einer Liste der markierten Angaben, einer Erläuterung, weshalb die markierten Angaben möglicherweise zu einem Druckproblem führen und von Vorschlägen, wie das Druckproblem bereinigt werden kann, enthält.

## Revendications

1. Système de génération de documents comprenant :
un poste de travail (13) pour la conception de documents comprenant un ordinateur programmé pour permettre à un opérateur de générer un fichier électronique stockant une pluralité de paramètres différents du document spécifiant un document à produire, dans lequel l'ordinateur (13) ou un autre ordinateur (10), auquel le fichier électronique est délivré, est programmé par un logiciel,
un moyen de commande agencé pour commander l'ordinateur afin qu'il vérifie automatiquement les paramètres du document stockés dans les fichiers électroniques qui doivent être utilisés pour produire le document, ledit moyen de commande de logiciel étant agencé pour comparer la pluralité de paramètres du document à un ensemble prédéterminé de paramètres pour déterminer si l'un quelconque de la pluralité de paramètres du document est erroné, absent ou incompatible en ce qui concerne l'ensemble prédéterminé de paramètres et, sur la base des résultats de cette comparaison, identifier un ou plusieurs paramètres du document stockés dans le fichier électronique qui pourraient provoquer un problème lors de la production du document, et signaler à l'opérateur un paramètre du document ainsi identifié.

2. Système selon la revendication 1, comprenant un affichage caractérisé en ce que le moyen de commande de logiciel est agencé pour commander l'ordinateur ou l'autre ordinateur pour présenter des messages à l'opérateur sur l'affichage concernant des problèmes dans les paramètres du document identifiés.

3. Système selon la revendication 2, caractérisé en ce que les messages affichent des instructions sur le mode de correction des problèmes identifiés.

4. Système selon la revendication 2 ou 3, caractérisé en ce que les paramètres du document comprennent des informations de page, des informations de police de caractères et des informations de couleurs et les messages spécifient les problèmes qui se posent avec des informations quelconques de page, de police de caractères et de couleurs et/ou les paramètres du document comprennent des informations d'images, notamment la taille et l'orientation des images, comprises dans le document et les messages spécifient les problèmes qui se posent avec des informations quelconques de l'image.

5. Système selon l'une quelconque des revendications 1 à 4, caractérisé en ce que les problèmes potentiels de production comprennent des images improprement mises à l'échelle, mises en travers ou tournées.

6. Système selon l'une quelconque des revendications 1 à 5, dans lequel l'ordinateur vérifie automatiquement les paramètres du document dans un format dans lequel ces paramètres du document sont créés et stockés dans le fichier électronique au poste de travail pour la conception de documents.

7. Procédé de traitement par ordinateur d'un fichier électronique spécifiant une variété de paramètres pour l'impression d'un document conçu, comprenant les étapes suivantes exécutées par ordinateur :
(a) l'analyse de la variété de paramètres spécifiés dans le fichier électronique,
(b) la détection de paramètres qui spécifient des données d'impression incompatibles, erronées, absentes ou incomplètes et
(c) l'affichage d'un message relatif aux paramètres détectés pour informer un opérateur d'un besoin de corriger ou de compléter les paramètres.

8. Procédé selon la revendication 7, dans lequel le fichier électronique stocke la variété spécifiée de paramètres dans un format naturel du logiciel de conception de documents utilisé pour la conception du document et dans lequel l'étape (a) comprend en outre :
la comparaison de la variété de paramètres dans le format naturel du logiciel de conception de documents à un ensemble prédéterminé de paramètres d'impression pour déterminer si l'un quelconque de la variété de paramètres est erroné, absent ou incompatible en ce qui concerne l'ensemble prédéterminé de paramètres d'impression, et comprenant en outre :
l'affichage d'un ou de plusieurs paramètres qui peuvent poser un problème dans l'impression du document conçu.

9. Procédé de conception et d'impression d'un document conçu, comprenant les étapes consistant :
(a) en un premier endroit, à concevoir un document conçu et à stocker une pluralité de paramètres d'impression qui définissent le document en format électronique dans un fichier électronique,
(b) à transmettre le fichier électronique à un second endroit éloigné,
(c) au second endroit, à coordonner la production du document conçu,
(d) au premier ou au second endroit, à traiter par ordinateur le fichier électronique selon la revendication 7,
(e) à imprimer le document conçu.

10. Procédé selon la revendication 7 ou 8, comprenant en outre :
l'affichage à un opérateur de la façon de remédier au problème affiché.

11. Procédé selon la revendication 9, caractérisé en ce que la comparaison des paramètres spécifiés comprend :
la comparaison de polices de caractères d'impression spécifiées à un ensemble prédéterminé de polices de caractères d'impression et la signalisation d'une ligne détail d'article de police de caractères lorsque la comparaison indique la présence d'une police de caractères d'impression spécifiée erronée, absente, incomplète ou incompatible,
la comparaison de couleurs d'impression spécifiées à des informations de couleurs prédéterminées et la signalisation d'une ligne détail d'article de couleur lorsque la comparaison indique la présence d'une couleur d'impression spécifiée erronée, absente, incomplète ou incompatible,
la comparaison d'informations d'image d'impression spécifiées à des information d'image prédéterminées et la signalisation d'une ligne détail d'article d'image lorsque la comparaison indique la présence d'une image d'impression spécifiée erronée, absente, incomplète ou incompatible, et
l'affichage d'un message comprend l'affichage d'une liste des articles signalisés, une explication de la raison pour laquelle les articles signalisés peuvent poser un problème d'impression et des suggestions sur la manière d'éliminer le problème d'impression.
